(19)

**Europäisches Patentamt**
**European Patent Office**
**Office européen des brevets**

(11) **EP 2 913 999 A1**

(12) **EUROPEAN PATENT APPLICATION**

(43) Date of publication:
02.09.2015 Bulletin 2015/36

(51) Int Cl.:
*H04N 13/00* (2006.01)          *G06T 7/00* (2006.01)
*G08G 1/16* (2006.01)

(21) Application number: 15156440.8

(22) Date of filing: 25.02.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 28.02.2014 JP 2014039658
15.01.2015 JP 2015006153

(71) Applicant: **Ricoh Company, Ltd.**
**Tokyo 143-8555 (JP)**

(72) Inventors:
• **Zhong, Wei**
**Tokyo, 143-8555 (JP)**
• **Watanabe, Yoshikazu**
**Tokyo, 143-8555 (JP)**
• **Yokota, Soichiro**
**Tokyo, 143-8555 (JP)**
• **Saitoh, Kiichiro**
**Tokyo, 143-8555 (JP)**
• **Tamura, Ryohsuke**
**Tokyo, 143-8555 (JP)**

(74) Representative: **Schwabe - Sandmair - Marx**
**Patentanwälte**
**Stuntzstraße 16**
**81677 München (DE)**

(54) **Disparity value deriving device, equipment control system, movable apparatus, robot, disparity value deriving method, and computer-readable storage medium**

(57)    A device derives a disparity value for an object and includes an acquisition unit configure to calculate respective degrees of matching of candidate regions for a corresponding region in a comparison image corresponding to a first reference region in a reference image, based on a luminance value of the first reference region and luminance values of the candidate regions specified by shifting positions by predetermined shift amounts from a region corresponding to a position of the first reference region; and a synthesizer configured to calculate a synthesized degree of matching of each candidate region by aggregating a value obtained by adding a penalty associated with a corresponding one of the shift amounts to the degree of matching in the comparison image for a second reference region in the neighborhood of the first reference region, with the degree of matching of the candidate region, based on the shift amount.

FIG.1

EP 2 913 999 A1

**Description**

FIELD OF THE INVENTION

The present invention relates to a disparity value deriving device, an equipment control system, a movable apparatus, a robot, a disparity value deriving method, and a computer-readable storage medium.

BACKGROUND OF THE INVENTION

In recent years, vehicle-mounted systems have generally been used for preventing automobile collisions by measuring the distance between automobiles or the distance between an automobile and an obstacle. A stereo matching process using the principle of triangulation using a stereo camera has been used as a method of measuring the distance. The stereo matching process is a process of obtaining disparity by matching corresponding pixels between a reference image captured by one of two cameras of a stereo camera and a comparison image captured by the other camera, and calculating the distance between the stereo camera and an object included in the images from the disparity. The calculation of the distance to an object by this stereo matching process using a stereo camera enables a variety of recognition processing, and brake control and steering control for preventing collisions.

The stereo matching process as described above includes the block matching method in which, in order to evaluate the similarity between images, regions are cut out from the images to be compared and, for example, the sum of absolute differences (SAD) of luminance, the sum of squared differences (SSD), and the zero-mean normalized cross-correlation (ZNCC) are obtained for the regions. However, it is difficult to extract image features in a portion where texture in an image is weak, and the block matching method may not provide accurate disparity. A technique is then proposed as a method for deriving precise disparity, in which not only the cost of a pixel in a comparison image for a corresponding reference pixel in a reference image but also the costs of pixels in the neighborhood of the pixel in the comparison image are aggregated to derive disparity for an object with weak texture (see Japanese Patent Application Laid-open No. 2012-181142).

However, the technique described in Japanese Patent Application Laid-open No. 2012-181142 evaluates discontinuity of shift amounts by using a fixed penalty when aggregating costs of pixels in the neighborhood of a pixel in a comparison image. That is, discontinuities of shift amounts in a near region (a region with a large disparity value) and in a distant region (a region with a small disparity value) are evaluated with the same penalty, so that it is difficult to derive an accurate disparity value (distance) from the near region to the distant region.

The present invention is made in view of the foregoing and aims to provide a disparity value deriving device, an equipment control system, a movable apparatus, a robot, a disparity value deriving method, and a computer-readable storage medium that are capable of deriving an accurate disparity value.

SUMMARY OF THE INVENTION

It is an object of the present invention to at least partially solve the problems in the conventional technology.

According to an embodiment, there is provided a disparity value deriving device that derives a disparity value representing disparity for an object, based on a reference image obtained by a first imaging unit imaging the object and a comparison image obtained by a second imaging unit imaging the object. The disparity value deriving device includes an acquisition unit configure to calculate respective degrees of matching of a plurality of candidate regions serving as candidates for a corresponding region in the comparison image corresponding to a first reference region in the reference image, based on a luminance value of the first reference region and luminance values of the candidate regions specified by shifting positions by predetermined shift amounts from a region corresponding to a position of the first reference region, on an Epipolar line in the comparison image based on the first reference region; a synthesizer configured to calculate a synthesized degree of matching of each of the candidate regions by aggregating a value obtained by adding a penalty associated with a corresponding one of the shift amounts to the degree of matching in the comparison image for a second reference region in the neighborhood of the first reference region, with the degree of matching of the candidate region, based on the shift amount; and a deriving unit configured to derive the disparity value, based on the shift amount corresponding to a first extreme of the synthesized degrees of matching of the respective candidate regions in the comparison image.

According to another embodiment, there is provided a disparity value deriving method that includes: acquiring a degree of matching between a reference region in a reference image captured from a first imaging position and each of a plurality of regions in a comparison image captured from a second imaging position, the regions having been shifted by predetermined shift amounts from a position corresponding to the reference region in a designated range including a corresponding region corresponding to the reference region; synthesizing the acquired degree of matching of a reference region in the neighborhood of a predetermined reference region in the reference image and the acquired degree of matching of the predetermined reference region; and deriving a disparity value of an object whose image is being captured in the predetermined reference region, based on a synthesized degree of matching obtained at the synthesizing. The synthesizing includes correcting the degree of matching of the reference region in the neighborhood of the predetermined reference region in accordance with a corresponding one of the shift amounts, and thereafter synthesizing the corrected degree of matching with the degree of matching of the predetermined reference region.

According to still another embodiment, there is provided a computer-readable storage medium with an executable program stored thereon and executed by a computer. The program instructs the computer to execute: acquiring a degree of matching between a reference region in a reference image captured from a first imaging position and each of a plurality of regions in a comparison image captured from a second imaging position, the regions having been shifted by predetermined shift amounts from a position corresponding to the reference region in a designated range including a corresponding region corresponding to the reference region; synthesizing the acquired degree of matching of a reference region in the neighborhood of a predetermined reference region in the reference image and the acquired degree of matching of the predetermined reference region; and deriving a disparity value of an object whose image is being captured in the predetermined reference region, based on a synthesized degree of matching obtained at the synthesizing. The synthesizing includes correcting the degree of matching of the reference region in the neighborhood of the predetermined reference region in accordance with a corresponding one of the shift amounts, and thereafter synthesizing the corrected degree of matching with the degree of matching of the predetermined reference region.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

FIG. 1 is an illustration of the principle of deriving the distance from an imaging device to an object;
FIG. 2 illustrates (a) an example of a reference image, (b) an example of a high density disparity image, and (c) an example of an edge disparity image;
FIG. 3 illustrates a calculation of a cost while successively shifting candidates for a corresponding pixel in a comparison image relative to a reference image;
FIG. 4 is a graph illustrating costs with respect to shift amounts;
FIG. 5 is a conceptual diagram for deriving a synthesized cost;
FIG. 6 is a graph illustrating synthesized costs with respect to disparity values;
FIG. 7 illustrates an automobile equipped with a disparity value deriving device according to an embodiment of the present invention;
FIG. 8 is a schematic diagram of the object recognition system;
FIG. 9 is an overall hardware configuration diagram of the object recognition system;
FIG. 10 is a diagram illustrating an example of the block configuration of the disparity value deriving device according to the present embodiment;
FIG. 11 illustrates obtaining optimum penalties based on ideal disparity values corresponding to selected distances;
FIG. 12 is a graph illustrating the relation between shift amounts obtained using optimum penalties and synthesized costs;
FIG. 13 is a diagram illustrating subpixel estimation by parabola fitting;
FIG. 14 is a diagram illustrating subpixel estimation by the least-squares method;
FIG. 15 is a conceptual diagram illustrating a high density disparity image using the subpixel estimation; and
FIG. 16 is a diagram illustrating an example of the operation procedure of a stereo matching process of the disparity value deriving device according to the present embodiment;
FIG. 17 illustrates an example of an equipment control system according to the present embodiment mounted on a vehicle; and
FIG. 18 illustrates obtaining a graph representing the relation between shift amounts and optimum penalties, based on ideal disparity values corresponding to selected distances.

DETAILED DESCRIPTION OF THE PREFERRED EMBODIMENTS

Embodiments of the present invention will be described below with reference to the accompanying drawings.

Overview of Distance Measurement Method Using SGM Method

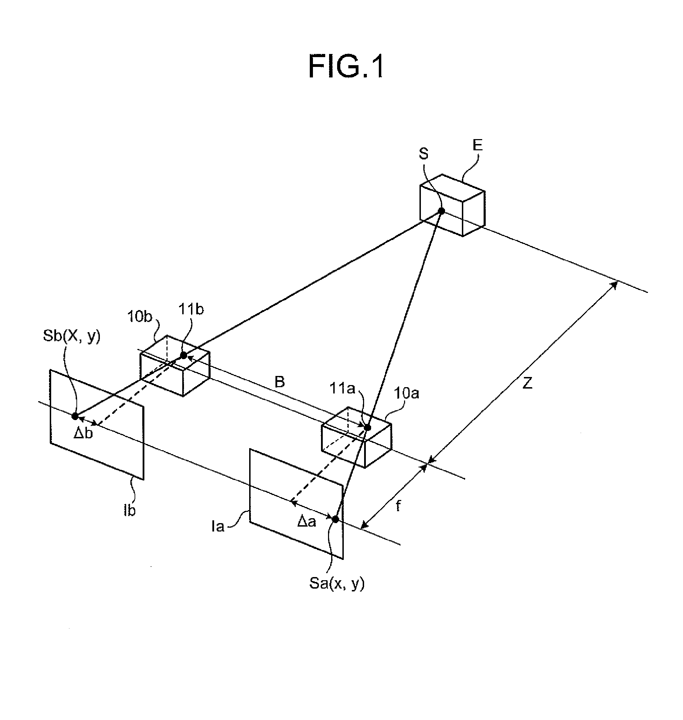

Referring first to FIG. 1 to FIG. 6, an overview of a distance measurement method using the semi-global matching (SGM) method will be described. The SGM method is disclosed in Accurate and Efficient Stereo Processing by Semi-Global Matching and Mutual Information) and a brief explanation is given below.

Principle of Distance Measurement

Referring to FIG. 1, the principle of measuring the distance from a stereo camera to an object will be described, in which disparity of the object is derived as a disparity value by conducting stereo imaging using the stereo camera, and the disparity value is used to measure the distance from the stereo camera to the object. FIG. 1 is an illustration of the principle of deriving the distance from imaging devices to an object. The following description explains processes with respect to each single pixel rather than with respect to each predetermined region including a plurality of pixels, to make the explanation simpler. When the process is performed not in units of single pixels but in units of predetermined regions each including a plurality of pixels, the predetermined region that includes a reference pixel is denoted as a reference region, and the predetermined region that includes a corresponding pixel is denoted as a corresponding region. The reference region may include a reference pixel alone and the corresponding region may include a corresponding pixel alone.

Disparity Value Calculation

The images captured by an imaging device 10a and an imaging device 10b illustrated in FIG. 1 are denoted as a reference image Ia and a comparison image Ib, respectively. In FIG. 1, the imaging device 10a and the imaging device 10b are installed parallel and at the same height. In FIG. 1, a point S on an object E in a three-dimensional space is captured at one position of the imaging device 10a and also at one position of the imaging device 10b, wherein these two positions are on the same horizontal line of the imaging device 10a and the imaging device 10b. That is, the point S in each image is captured at a point Sa(x,y) in the reference image Ia and a point Sb(x,y) in the comparison image Ib. Here, the disparity value $\Delta$ is expressed as Equation (1) using Sa(x,y) in the coordinates of the imaging device 10a and Sb(X,y) in the coordinates of the imaging device 10b.

$$\Delta = X - x \qquad (1)$$

Here, as in the case of FIG. 1, the disparity value is written as $\Delta = \Delta a + \Delta b$, where $\Delta a$ is the distance between the point Sa(x,y) in the reference image Ia and the point of intersection of the normal extending from the imaging lens 11a to the imaging surface, and $\Delta b$ is the distance between the point Sb(X,y) in the comparison image Ib and the point of intersection of the normal extending from the imaging lens 11b to the imaging surface.

Distance Calculation

The distance Z from the imaging devices 10a, 10b to the object E can be derived using the disparity value $\Delta$. Specifically, the distance Z is the distance from the plane including the focus position of the imaging lens 11a and the focus position of the imaging lens 11b to a particular point S on the object E. As illustrated in FIG. 1, the distance Z can be calculated by Equation (2) using the focal length f of the imaging lens 11a and the imaging lens 11b, the base line length B that is the length between the imaging lens 11a and the imaging lens 11b, and the disparity value $\Delta$.

$$Z = (B \times f)/\Delta \qquad (2)$$

From Equation (2), the greater the disparity value $\Delta$ is, the smaller the distance Z is, and the smaller the disparity value $\Delta$ is, the greater the distance Z is.

SGM Method

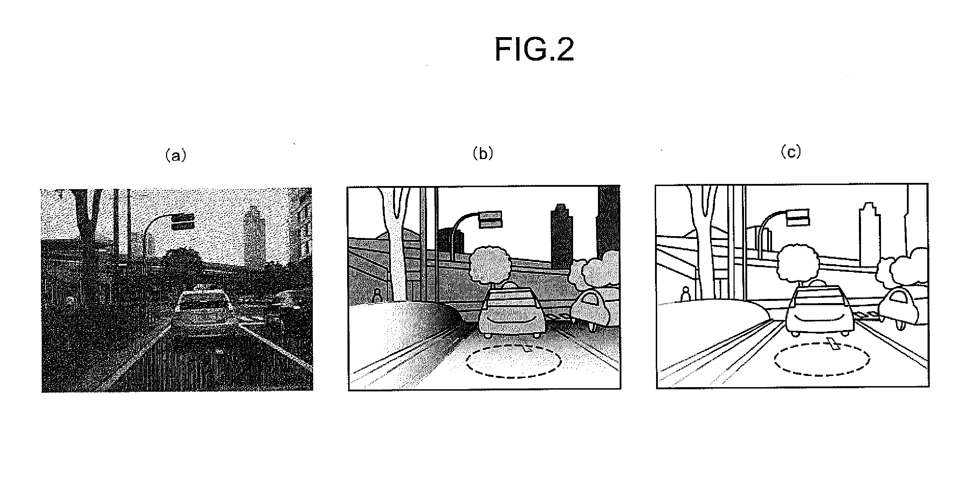

Referring now to FIG. 2 to FIG. 6, a distance measurement method using the SGM method will be described. FIG. 2(a) is a conceptual diagram illustrating a reference image, FIG. 2(b) is a conceptual diagram illustrating a high density disparity image for FIG. 2(a), and FIG. 2(c) is a conceptual diagram illustrating an edge disparity image for FIG.

2(a). Here, the reference image is an image representing an object by luminance. The high density disparity image is an image that is derived from the reference image by the SGM method and represents the disparity value at each set of coordinates in the reference image. The edge disparity image is an image that is derived by the conventionally used block matching method and represents the disparity values only at a part with relatively strong texture such as an edge in the reference image.

The SGM method is a method of deriving the disparity values appropriately even for an object with weak texture and deriving the high density disparity image illustrated in FIG. 2(b) based on the reference image illustrated in FIG. 2(a). When the block matching method is used, the edge disparity image illustrated in FIG. 2(c) is derived based on the reference image illustrated in FIG. 2(a). As can be understood by comparing the ovals enclosed by the broken lines in FIG. 2(b) and FIG. 2(c), compared with the edge disparity image, the high density disparity image can represent detailed information such as a road with weak texture and therefore enables distance measurement in more detail.

In the SGM method, a disparity value is derived by calculating a cost and thereafter further calculating a synthesized cost that is synthesized dissimilarity, rather than deriving a disparity value immediately after calculating a cost that is dissimilarity. In this method, a disparity image (here, high density disparity image) representing disparity values in almost all the pixels is finally derived. The block matching method is the same as the SGM method in that a cost is calculated. However, unlike the SGM method, the disparity values only at a part with relatively strong texture such as an edge are derived without synthesized costs being calculated.

Calculation of Cost

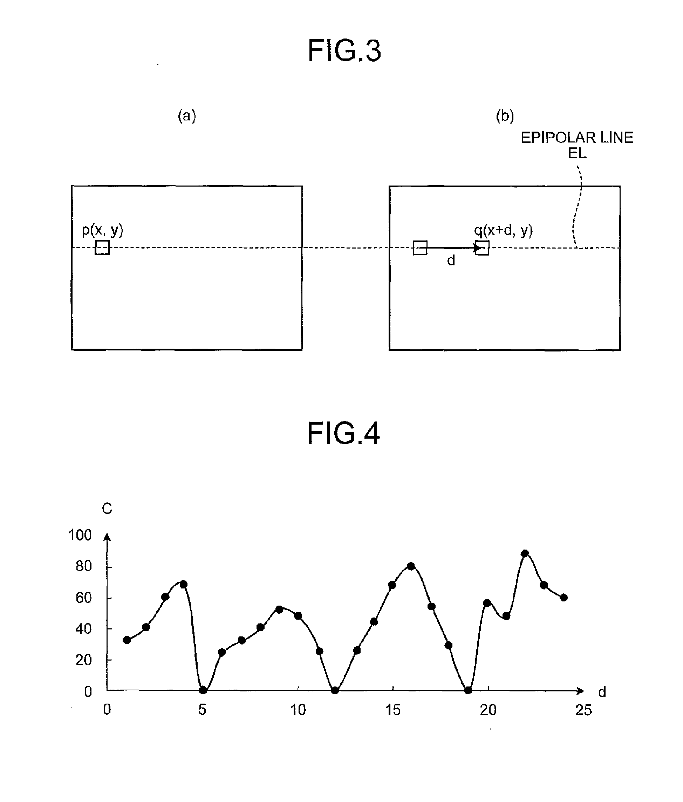

Referring first to FIG. 3 and FIG. 4, a method of calculating a cost C(p,d) will be described. FIG. 3(a) is a conceptual diagram illustrating a reference pixel in a reference image and FIG. 3(b) is a conceptual diagram of calculating costs while successively shifting (displacing) candidates for the corresponding pixel in a comparison image relative to the reference pixel in (a). FIG. 4 is a graph illustrating costs with respect to shift amounts. Here, the corresponding pixel is a pixel in the comparison image that is the most similar to the reference pixel in the reference image. In the following description, it is assumed that C(p,d) represents C(x,y,d).

As illustrated in FIG. 3(a), the cost C(p,d) of each candidate corresponding pixel q(x+d,y) that corresponds to the reference pixel p(x,y) is calculated based on the luminance values of a predetermined reference pixel p(x,y) in the reference image and of a plurality of candidate corresponding pixels q(x+d,y) on the epipolar line EL in the comparison image that corresponds to the reference pixel p(x,y). The variable d is a shift amount (displacement amount) of each candidate q for the corresponding pixel from the reference pixel p, and a shift amount is expressed in units of pixels in the present embodiments. That is, in FIG. 3, the cost C(p,d) that is dissimilarity in luminance value between a candidate corresponding pixel q(x+d,y) and the reference pixel p(x,y) is calculated while successively shifting the candidate corresponding pixels q(x+d,y) one pixel by one pixel in a predetermined range (for example, 0 < d < 25). A known method such as SAD (Sum of Absolute Difference) is applied as the method of calculating the cost C where the cost C denotes dissimilarity.

As illustrated in FIG. 4, the cost C(p,d) thus calculated can be expressed by a graph of a cost curve that is a set of the costs C with respect to shift amounts d. In FIG. 4, since the cost C is zero when the shift amount d = 5, 12, 19, the minimum value cannot be obtained. In the case of an object with weak texture, it is thus difficult to obtain the minimum value of the cost C.

Calculation of Synthesized Cost

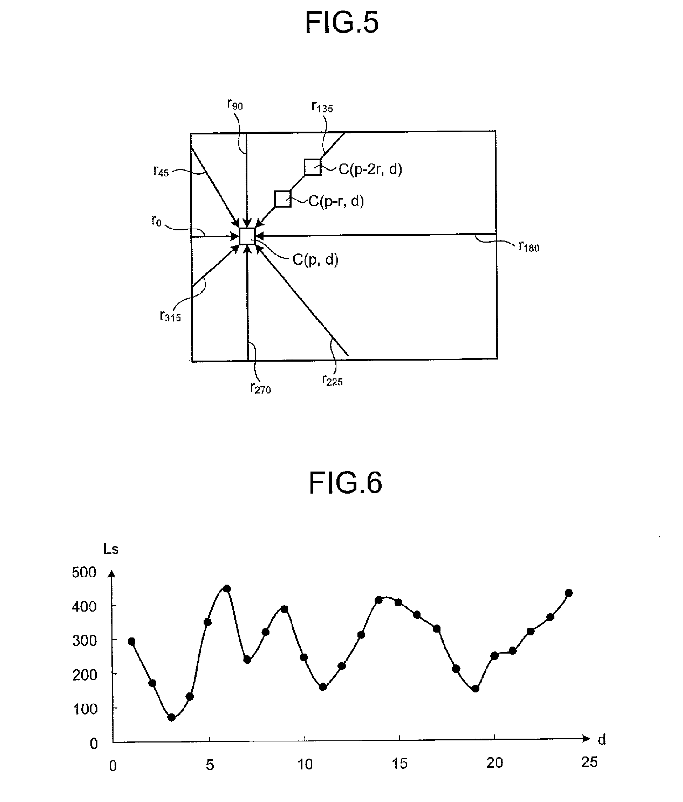

Referring now to FIG. 5 and FIG. 6, the method of calculating a synthesized cost Ls(p,d) will be described. FIG. 5 is a conceptual diagram for deriving a synthesized cost. FIG. 6 is a graph of a synthesized-cost curve illustrating synthesized costs with respect to disparity values.

In the method of calculating a synthesized cost in the present embodiments, the cost C(p,d) in the reference pixel p(x,y) is calculated, and costs for each one of pixels $p(x_n,y_n)$ existing near to far positions from the reference pixel p(x,y) is also calculated as costs C for each one of another reference pixels $p(x_n,y_n)$. With this configuration, the synthesized cost Ls(p,d) for the reference pixel p(x,y) is calculated by aggregating the calculated cost C(p,d) for the reference pixel p(x,y) and the calculated costs C for other reference pixels $p(x_n,y_n)$ existing near to far positions from the reference pixel p(x,y). Similarly, the synthesized cost Ls for each one of reference pixels $p(x_n,y_n)$ is calculated by aggregating the calculated cost C for one reference pixel $p(x_n,y_n)$ and the calculated costs C for other reference pixels existing near to far positions from the reference pixel $p(x_n,y_n)$.

The method of calculating a synthesized cost will now be described in more detail. In order to calculate the synthesized cost Ls(p,d), first, it is necessary to calculate a path cost Lr(p,d). Equation (3) is an equation for calculating the path cost Lr(p,d), and Equation (4) is an equation for calculating the synthesized cost Ls.

$$Lr(p,d) = C(p,d) + \min\{(Lr(p-r,d), \ Lr(p-r,d-1)+P1,$$
$$Lr(p-r,d+1) + P1, \ Lrmin(p-r) + p2\} \qquad (3)$$

Here, in Equation (3), r denotes a direction vector in the aggregation direction and has two components of the x direction and the y direction. The term min{} is a function for obtaining the minimum value. Lrmin (p-r) denotes the minimum value of Lr(p-r,d) when the shift amount d is changed in the coordinates in which p is shifted by one pixel in r direction. The path cost Lr is recurrently applied as expressed in Equation (3). P1 and P2 are fixed parameters set by experiment in advance such that the disparity values $\Delta$ of adjacent reference pixels on the path are likely to be continuous. For example, P1 = 48, P2 = 96. As expressed in Equation (3), the path cost Lr(p,d) is obtained by adding the minimum value of the path cost Lr of each pixel in the pixels in r direction illustrated in FIG. 5 to the cost C in the reference pixel p(x,y). As described above, in order to obtain Lr at each pixel in r direction, Lr is obtained first from the endmost pixel in r direction of the reference pixel p(x,y), and Lr is obtained along r direction. As illustrated in FIG. 5, $Lr_0$, $Lr_{45}$, $Lr_{90}$, $Lr_{135}$, $Lr_{180}$, $Lr_{225}$, $Lr_{270}$, $Lr_{315}$ in eight directions are obtained, and the synthesized cost Ls is eventually obtained based on Equation (4).

$$Ls(p, d) = \sum_8 Lr \qquad (4)$$

The synthesized cost Ls(p,d) thus calculated can be represented by a graph of a synthesized-cost curve representing the synthesized cost Ls(p,d) with respect to the shift amount d, as illustrated in FIG. 6. In FIG. 6, the synthesized cost Ls has the minimum value when the shift amount d = 3 and therefore is calculated as the disparity value $\Delta = 3$. Although the number of r is eight in the foregoing description, the number is not limited thereto. For example, the eight directions may be further divided by two into 16 directions or by three into 24 directions. Although being expressed as "dissimilarity", the cost C may be expressed as "similarity" that is a reciprocal of dissimilarity. In this case, a known method such as NCC (Normalized Cross Correlation) is applied as the method of calculating the cost C. In this case, the disparity value $\Delta$ not with the minimum but with the "maximum" synthesized cost Ls is derived. The similarity and the dissimilarity may be inclusively denoted as "matching degree".

Specific Description of Present Embodiments

Specific descriptions of the present embodiments are given below with reference to the drawings. Here, an object recognition system 1 mounted on an automobile will be described. The object recognition system 1 may be mountable not only on an automobile as an example of a vehicle but also on a motor bicycle, a bicycle, a wheelchair, and an agricultural cultivator as other examples of a vehicle. The object recognition system 1 may be mountable not only on a vehicle as an example of a movable apparatus but also on a robot as another example of a movable apparatus. The robot may not be a movable apparatus but may be an apparatus such as an industrial robot fixedly installed in FA (Factory Automation). The apparatus fixedly installed may not be a robot but may be a security monitoring camera.

Configuration of Embodiment

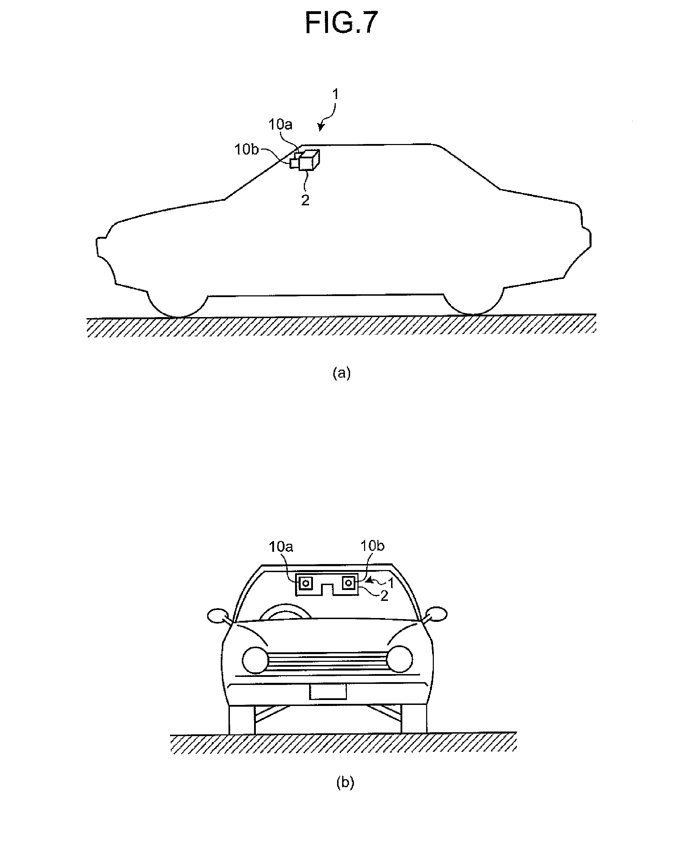

First, the overall configuration of each of the present embodiments will be described with reference to FIG. 7 to FIG. 9.

External Configuration

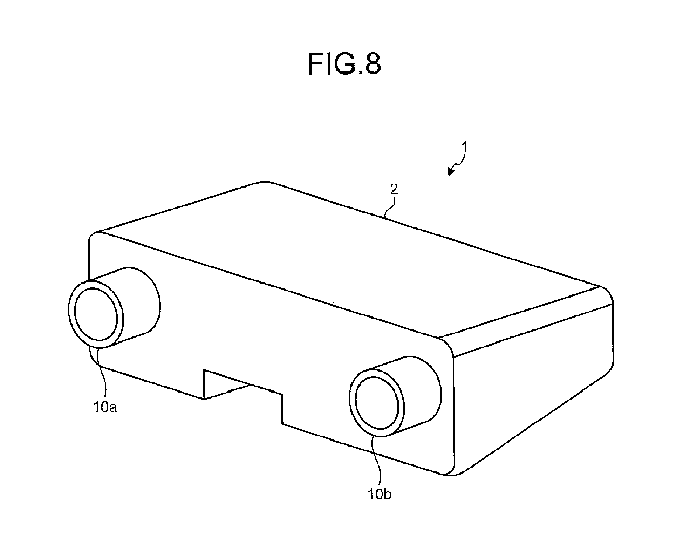

With reference to FIG. 7 and FIG. 8, an external configuration of the object recognition system 1 in the present embodiments will be described. FIG. 7(a) is a schematic diagram depicting a side of an automobile equipped with the object recognition system according to an embodiment of the present invention and FIG. 7(b) is a schematic diagram depicting the front of the automobile. FIG. 8 is a schematic diagram of the object recognition system.
As illustrated in FIG. 7(a) and 7(b), the object recognition system 1 in the present embodiments includes an imaging device 10a (first imaging unit) and an imaging device 10b (second imaging unit). The imaging device 10a and the imaging device 10b are installed (first imaging position, second imaging position) so as to be able to image the scene ahead in the direction in which the automobile travels. As illustrated in FIG. 8, the object recognition system 1 includes a main body 2 and a pair of cylindrical imaging device 10a and imaging device 10b provided on the main body 2.

Overall Hardware Configuration

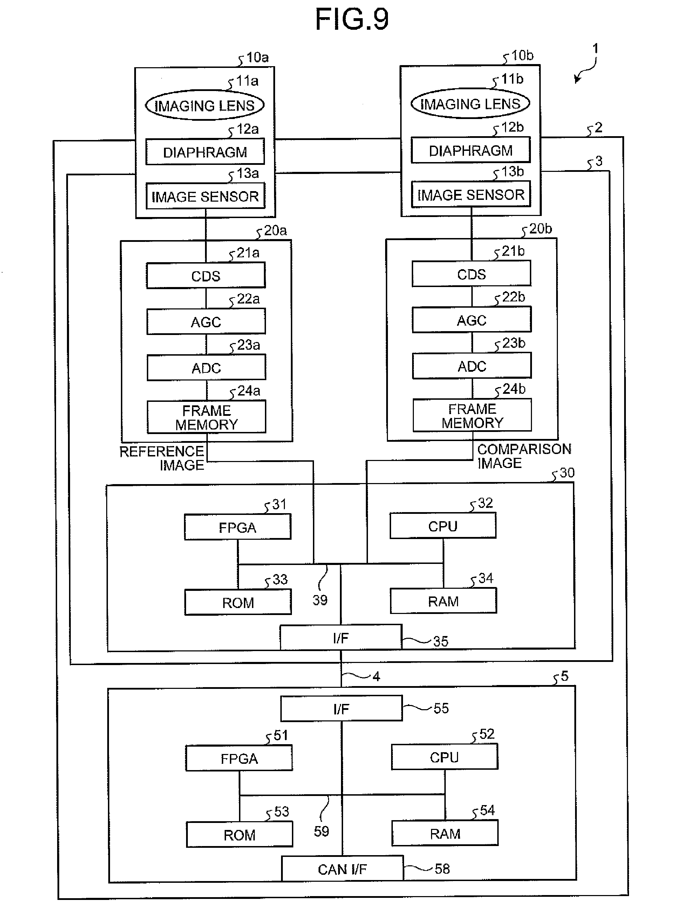

Referring now to FIG. 9, an overall hardware configuration of the object recognition system 1 will be described. FIG. 9 is a hardware configuration diagram of the object recognition system as a whole.

As illustrated in FIG. 9, the object recognition system 1 includes a disparity value deriving device 3 and an object recognition device 5 in the main body 2.

The disparity value deriving device 3 derives a disparity value $\Delta$ indicating disparity for an object E from a plurality of images obtained by imaging the object E and outputs a high density disparity image indicating the disparity value $\Delta$ in each pixel. The object recognition device 5 performs processing such as measuring the distance from the imaging devices 10a, 10b to the object E, based on the high density disparity image output from the disparity value deriving device 3.

Here, a hardware configuration of the disparity value deriving device 3 will be described first. As illustrated in FIG. 9, the disparity value deriving device 3 includes the imaging device 10a, the imaging device 10b, a signal conversion device 20a, a signal conversion device 20b, and an image processing device 30.

The imaging device 10a generates an analog signal representing an image by imaging the scene ahead and includes an imaging lens 11a, a diaphragm 12a, and an image sensor 13a.

The imaging lens 11a is an optical element for diffracting light passing through the imaging lens 11a to form an image of an object. The diaphragm 12a cuts off part of light passing through the imaging lens 11a to adjust the quantity of light input to the image sensor 13a described later. The image sensor 13a is a semiconductor device that converts light input from the imaging lens 11a and the diaphragm 12a into an electrical analog image signal and is implemented, for example, by a charge coupled device (CCD) or a complementary metal oxide semiconductor (CMOS). The imaging device 10b has the same configuration as the imaging device 10a, and a description of the imaging device 10b is omitted. The imaging lens 11a and the imaging lens 11b are installed such that their respective lens surfaces are on the same plane.

The signal conversion device 20a converts an analog signal representing the captured image into image data in digital format, and includes a correlated double sampling (CDS) 21a, an auto gain control (AGC) 22a, an analog digital converter (ADC) 23a, and a frame memory 24a.

The CDS 21a removes noise by correlated double sampling from the analog image signal converted by the image sensor 13a. The AGC 22a performs gain control of controlling the intensity of the analog image signal having noise removed by the CDS 21a. The ADC 23a converts the analog image signal gain-controlled by the AGC 22a into image data in digital format. The frame memory 24a stores the image data converted by the ADC 23a.

Similarly, the signal conversion device 20b obtains image data from the analog image signal converted by the imaging device 10b and includes a CDS 21b, an AGC 22b, an ADC 23b, and a frame memory 24b.

The CDS 21b, the AGC 22b, the ADC 23b, and the frame memory 24b have the same configuration as the CDS 21a, the AGC 22a, the ADC 23a, and the frame memory 24a, respectively, and a description thereof is omitted.

The image processing device 30 is a device for processing image data converted by the signal conversion device 20a and the signal conversion device 20b. The image processing device 30 includes a field programmable gate array (FPGA) 31, a central processing unit (CPU) 32, a read only memory (ROM) 33, a random access memory (RAM) 34, an interface (I/F) 35, and a bus line 39 such as an address bus and a data bus for electrically connecting the components 31 to 35 as illustrated in FIG. 9.

The FPGA 31 is an integrated circuit and performs the process of calculating a disparity value $\Delta$ in the image represented by image data in accordance with an instruction from the CPU 32. The CPU 32 controls each function in the disparity value deriving device 3. The ROM 33 stores an image processing program for the CPU 32 to execute to control each function in the disparity value deriving device 3. The RAM 34 is used as a work area for the CPU 32. The I/F 35 is an interface for communicating with the I/F 55 of the object recognition device 5 described later through the bus line 4 such as an address bus and a data bus.

A hardware configuration of the object recognition device 5 will now be described. As illustrated in FIG. 9, the object recognition device 5 includes an FPGA 51, a CPU 52, a ROM 53, a RAM 54, an I/F 55, a controller area network (CAN) I/F 58, and a bus line 59 such as an address bus and a data bus for electrically connecting the components 51 to 55, 58 as illustrated in FIG. 9.

The FPGA 51, the CPU 52, the ROM 53, the RAM 54, the I/F 55, and the bus line 59 have the same configuration as the FPGA 31, the CPU 32, the ROM 33, the RAM 34, the I/F 35, and the bus line 39, respectively, in the image processing device 30 and a description thereof is omitted. The I/F 55 is an interface for communicating with the I/F 35 in the image processing device 30 through the bus line 4. The ROM 53 stores an object recognition program for the CPU 52 to execute to control each function in the object recognition device 5. The CAN I/F 58 is an interface for communicating with, for example, an external controller and can be connected to, for example, a controller area network (CAN) of the automobile.

In such a configuration, when a high density disparity image is transmitted from the I/F 35 of the image processing device 30 to the object recognition device 5 through the bus line 4, the FPGA 51 calculates the distance Z from the imaging devices 10a, 10b to an object E according to an instruction from the CPU 52 in the object recognition device 5.

The FPGA 31 may calculate the distance Z under an instruction from the CPU 32 of the image processing device 30, rather than the FPGA 51 calculating the distance Z under an instruction from the CPU 52 in the object recognition device 5.

The programs described above may be recorded in an installable or executable file format on a computer-readable storage medium to be distributed. Examples of the storage medium include a compact disc read only memory (CD-ROM) and a secure digital (SD) memory card.

Block Configuration of Disparity Value Deriving Device and Operation of Each Block

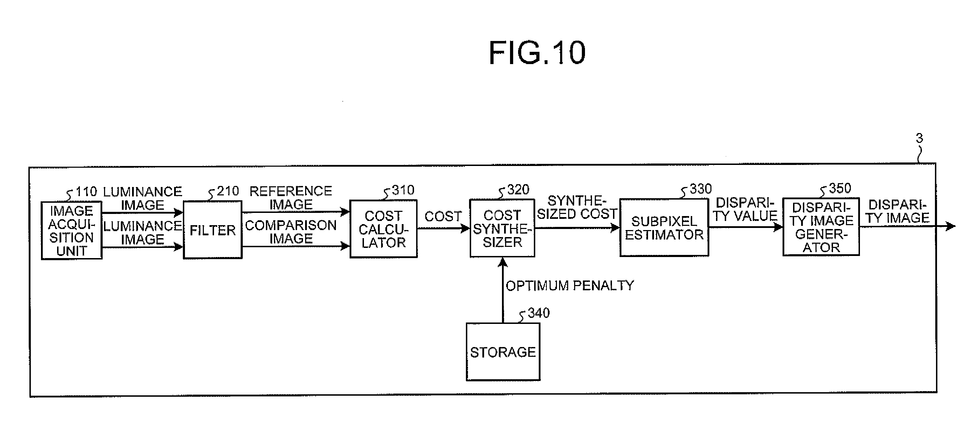

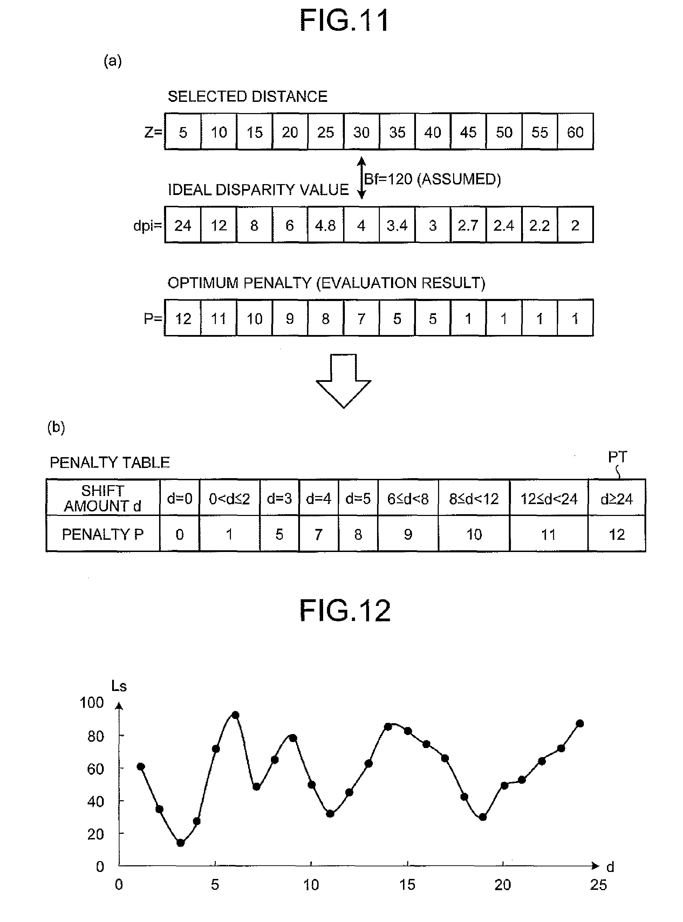

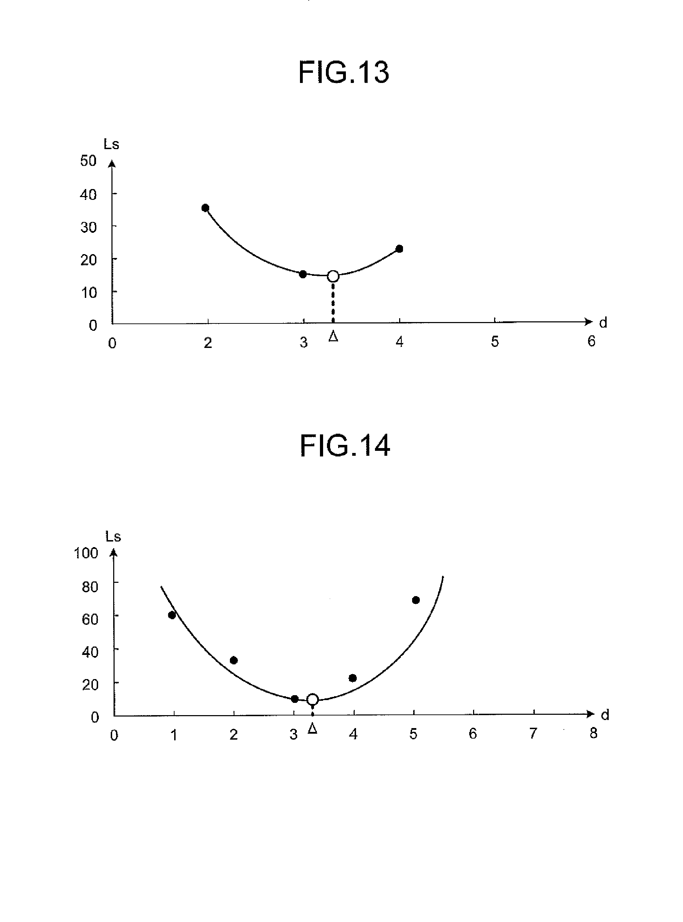

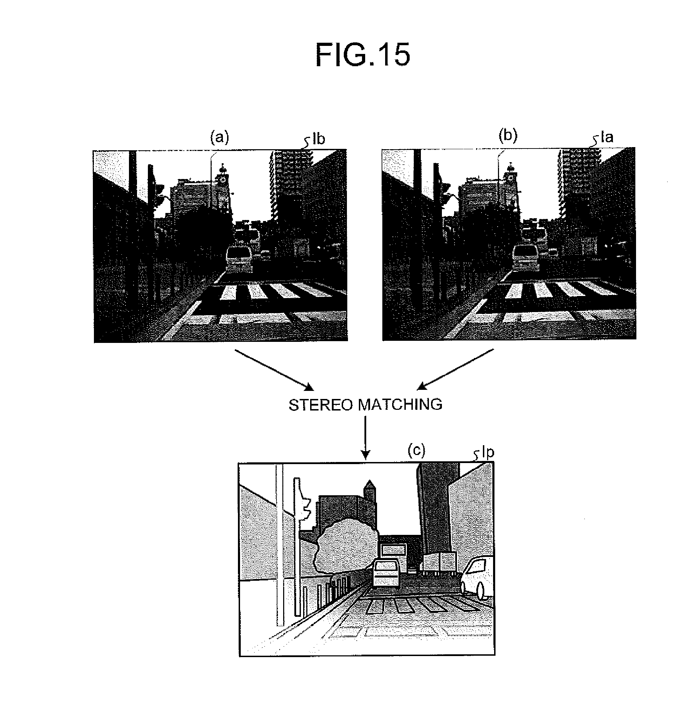

FIG. 10 is a diagram illustrating an example of the block configuration of the disparity value deriving device according to the present embodiment. FIG. 11 illustrates obtaining optimum penalties based on ideal disparity values corresponding to selected distances. FIG. 12 is a graph illustrating the relation between shift amounts obtained using optimum penalties and synthesized costs. FIG. 13 is a diagram illustrating subpixel estimation by parabola fitting. FIG. 14 is a diagram illustrating subpixel estimation by the least-squares method. FIG. 15 illustrates a high density disparity image using the subpixel estimation. Referring to FIG. 10 to FIG. 15, a bock configuration of the principal part of the disparity value deriving device 3 and the operation of each block will be described. The imaging device 10a illustrated in FIG. 8 is referred to as the "right" camera and the imaging device 10b is referred to as the "left" camera, for convenience of explanation.

As illustrated in FIG. 10, the disparity value deriving device 3 includes an image acquisition unit 110, a filter 210, a cost calculator 310 which may be referred to as an acquisition unit, a cost synthesizer 320, a subpixel estimator 330 which may be referred to as a deriving unit, a storage 340, and a disparity image generator 350.

The image acquisition unit 110 is a processing unit that images an object ahead with the two, left and right cameras and generates analog image signals to obtain two luminance images that are images based on the respective image signals. The image acquisition unit 110 is implemented by the imaging device 10a and the imaging device 10b illustrated in FIG. 9.

The filter 210 removes noise from the image signals of the two luminance images obtained by the image acquisition unit 110, converts the image signals into digital image data, and outputs the converted digital image data. Here, of the image data of the two luminance images (hereinafter simply referred to as "luminance images") output by the filter 210, the luminance image captured by the right camera (imaging device 10a) of the image acquisition unit 110 is set as the image data of the reference image Ia (hereinafter simply referred to as "reference image Ia"), and the luminance image captured by the left camera (imaging device 10b) is set as the image data of the comparison image Ib (hereinafter simply referred to as "comparison image Ib"). That is, the filter 210 outputs the reference image Ia and the comparison image Ib, based on the two luminance images output from the image acquisition unit 110. The filter 210 is implemented by the signal converters 20a, 20b illustrated in FIG. 9.

The storage 340 stores therein a penalty table PT to be used when the cost synthesizer 320 calculates a path cost $Lr(p,d)$. The penalty table PT is a lookup table in which shift amounts d and penalties P are associated with each other, as illustrated in (b) in FIG. 11. The storage 340 is implemented by the ROM 33 or the RAM 34 illustrated in FIG. 9.

The cost calculator 310 calculates and obtains the cost $C(p,d)$ of each candidate pixel $q(x+d,y)$, based on the luminance value of a reference pixel $p(x,y)$ in the reference image Ia and the luminance value of each of the candidate pixels $q(x+d,y)$ (candidate regions) as candidates for the corresponding pixel that are specified by shifting positions by shift amounts d, that is, predetermined displacement amounts, from the pixel corresponding to the position of the reference pixel $p(x,y)$, on the Epipolar line in the comparison image Ib based on the reference pixel $p(x,y)$. That is, each candidate pixel $q(x+d,y)$ is a pixel displaced by a predetermined displacement from the position corresponding to the position of the reference pixel $p(x,y)$.

Here, the cost is an evaluation value representing the degree of dissimilarity of each pixel in the comparison image Ib relative to the reference pixel p in the reference image Ia. That is, the smaller value of the cost (and synthesized cost) illustrated below indicates that the pixel in the comparison image is similar to the reference pixel.

The cost calculator 310 is implemented by the FPGA 31 illustrated in FIG. 9. The cost C calculated by the cost calculator 310 is, for example, the sum of absolute differences (SAD) or the sum of squared differences (SSD). The graph in FIG. 4 above illustrates the relation between the shift amounts d and the costs C calculated by the cost calculator 310. In the graph illustrated in FIG. 4, approximations of the minimum value of the cost C are given when the shift amount d = 5, 12, 19. It is therefore difficult to obtain the minimum value of the costs C to obtain the corresponding pixel in the comparison image Ib corresponding to the reference pixel in the reference image Ia. Particularly when an image includes a portion with weak texture, it is thus difficult to obtain the minimum value of the costs C.

The cost synthesizer 320 calculates the synthesized cost $Ls(p,d)$ of the candidate pixel $q(x+d,y)$ by aggregating the costs C of the pixels in the comparison image Ib for reference pixels (second reference region) that are pixels in the neighborhood of the reference pixel $p(x,y)$ (first reference region) in the reference image Ia, with the cost $C(p,d)$ of the candidate pixel $q(x+d,y)$ calculated by the cost calculator 310. The cost synthesizer 320 is implemented by the FPGA 31 illustrated in FIG. 9.

In order to calculate the synthesized cost Ls(p,d), first, the cost synthesizer 320 calculates a path cost Lr(p,d) in a predetermined direction of r by Equation (5) below. The path cost Lr(p,d) is a value calculated by aggregating costs C in the comparison image Ib for the reference pixels adjacent in the directions of r to the reference pixel p(x,y) in the reference image Ia, with the cost C(p,d) of the candidate pixel q(x+d,y) calculated by the cost calculator 310, as illustrated by Equation (5).

$$\mathrm{Lr(p,d) = C(p,d) + \min(Lr(p-r,k) + P(d,k))} \qquad (5)$$

where $P(d,k) = Pa(d)$ if $d = k$, and $P(d,k) = Pb(d)$ if $d \neq k$.

In Equation (5), k is a variable. In Equation (5), the values P1, P2 in Equation (3) are varied according to the shift amount d.

The cost synthesizer 320 refers to the penalty table PT stored in the storage 340 and calculates a path cost Lr(p,d), using an optimum or suitable penalty P(d,k) (hereinafter simply denoted as "optimum penalty P") associated with a shift amount d, as illustrated by Equation (5). That is, the cost C(p,d) is synthesized after any one of Lr(p-r,k) with the variable k is corrected with a penalty P corresponding to a shift amount d as a displacement amount. One of the penalties Pa(d) and Pb(d) may be zero. As in the penalty table PT illustrated in (b) in FIG. 11, the penalty P has a larger value as the associated shift amount d is larger. In Equation (3) above, the path cost Lr is calculated using fixed values P1, P2 (penalties). It follows that evaluations are made with the same penalties even for regions different in change in distance with a change in the shift amount d, such as a near region (a region with a large disparity value) and a distant region (a region with a small disparity value). It has been revealed that, with such a method, it is difficult to derive an accurate disparity value (distance) from a near region to a distant region. In the present embodiment, then, an optimum or suitable penalty is derived and used in accordance with a shift amount d in order to calculate a path cost Lr. A method of deriving an optimum penalty P based on a shift amount d as illustrated in the penalty table PT in (b) in FIG. 11 will be described later.

The cost synthesizer 320 calculates the path costs Lr in eight directions ($r_0$, $r_{45}$, $r_{90}$, $r_{135}$, $r_{180}$, $r_{225}$, $r_{270}$, and $r_{315}$), namely, $Lr_0$, $Lr_{45}$, $Lr_{90}$, $Lr_{135}$, $Lr_{180}$, $Lr_{225}$, $Lr_{270}$, and $Lr_{315}$, as illustrated in FIG. 5, and finally calculates the synthesized cost Ls(p,d) based on Equation (4) above. The graph in FIG. 12 illustrates the relation between the shift amounts d and the synthesized costs Ls calculated by the cost synthesizer 320. As illustrated in FIG. 12, the synthesized cost Ls has the minimum value when the shift amount d = 3. Although the number of directions of r is eight in the foregoing description, the embodiments are not limited thereto. For example, the eight directions may be further divided by two into 16 directions or by three into 24 directions. Otherwise, the synthesized cost Ls may be calculated by obtaining path costs Lr in any one of the eight directions.

The subpixel estimator 330 executes subpixel estimation, based on the synthesized costs Ls, calculated by the cost synthesizer 320, at the shift amount d corresponding to the minimum value (first extreme) of the synthesized costs Ls of pixels in the comparison image Ib for the reference pixel in the reference image Ia and at the adjacent shift amounts d. The subpixel estimator 330 is implemented by the FPGA 31 illustrated in FIG. 9. The graph of the synthesized costs Ls illustrated in FIG. 12 is the graph of the synthesized costs Ls with respect to shift amounts d in units of pixels. It follows that the minimum value of the synthesized costs Ls in the graph in FIG. 12 is the synthesized cost Ls at the shift amount d = 3 in units of pixels. That is, in the graph of the synthesized costs Ls with respect to the shift amounts d in units of pixels as illustrated in FIG. 12, only a value in units of pixels can be derived as a disparity value Δ. Here, subpixel estimation refers to estimating and deriving a disparity value Δ in a unit smaller than a pixel (hereinafter referred to as units of subpixels), rather than a value in units of pixels.

Referring first to FIG. 13, a case in which the subpixel estimator 330 executes subpixel estimation by parabola fitting will be described. The subpixel estimator 330 obtains the value of the shift amount d that corresponds to the smallest synthesized cost Ls in the graph (FIG. 12) of the synthesized costs Ls calculated by the cost synthesizer 320. In the example in FIG. 12, the shift amount d = 3 corresponds to the smallest synthesized cost Ls. Next, the subpixel estimator 330 obtains the shift amounts d adjacent to the shift amount d = 3. Specifically, the shift amount d = 2, 4. Next, the subpixel estimator 330 obtains a quadratic curve convex downward that passes through three points at which the shift amount d = 2, 3, 4, as illustrated in FIG. 13, in the graph of the shift amounts d and the synthesized costs Ls in FIG. 12. The subpixel estimator 330 then estimates that the shift amount d in units of subpixels corresponding to the local minimum value (second extreme) of the quadratic curve is the disparity value Δ.

Referring now to FIG. 14, a case where the subpixel estimator 330 executes subpixel estimation by the least-squares method will be described. The subpixel estimator 330 obtains the value of the shift amount d at which the synthesized cost Ls is the smallest in the graph (FIG. 12) of the synthesized costs Ls calculated by the cost synthesizer 320. In the example in FIG. 12, the shift amount d = 3 corresponds to the smallest synthesized cost Ls. Next, the subpixel estimator 330 obtains four shift amounts d in the vicinity of the shift amount d = 3. Specifically, the shift amount d = 1, 2, 4, 5. Next, the subpixel estimator 330 obtains a quadratic curve convex downward that passes through the vicinity of the five points at which the shift amount d = 1, 2, 3, 4, 5 by the least squares method, as illustrated in FIG. 14, in the graph of the shift amounts d and the synthesized costs Ls in FIG. 12. The subpixel estimator 330 then estimates that the shift amount d in units of subpixels corresponding to the local minimum value (third extreme) of the quadratic curve is the disparity value Δ.

The subpixel estimator 330 estimates and derives the disparity value Δ by the subpixel estimation based on parabola fitting as illustrated in FIG. 13 or the subpixel estimation based on the least squares method as illustrated in FIG. 14. Since the disparity value Δ can be thus derived in units of subpixels, which are units smaller than pixel credits, accurate and high density disparity values Δ can be derived.

The subpixel estimation is not limited to estimation based on parabola fitting and estimation based on the least squares method but may be based on other methods. For example, the subpixel estimator 330 may execute subpixel estimation using the three points illustrated in FIG. 13, by equiangular linear fitting for estimating the disparity value Δ by obtaining equiangular lines passing through the three points, rather than a quadratic curve.

In the subpixel estimation based on the least squares method, a quadratic curve is obtained using five points on the graph in FIG. 14. However, embodiments are not limited thereto, and a quadratic curve may be obtained using a different number of points.

Embodiments are not limited to calculation of the disparity value Δ in units of subpixels through subpixel estimation by the subpixel estimator 330. The disparity value Δ in units of pixels may be calculated without executing the subpixel estimation. In this case, the subpixel estimator 330 outputs, as a disparity value Δ, the shift amount d corresponding to the minimum value of the synthesized costs Ls of pixels in the comparison image Ib for the reference pixel in the reference image Ia that are calculated by the cost synthesizer 320.

The disparity image generator 350 generates a disparity image Ip (high density disparity image), which is an image representing the luminance value of each pixel in the reference image Ia by the disparity value Δ corresponding to that pixel, based on the disparity value Δ in units of subpixels derived by the subpixel estimator 330. The disparity image generator 350 is implemented by the FPGA 31 illustrated in FIG. 9. In FIG. 15, (a) is a schematic diagram illustrating an example of the comparison image Ib, (b) is a schematic diagram illustrating an example of the reference image Ia, and (c) is a schematic diagram illustrating a conceptual diagram of the disparity image Ip generated by the disparity image generator 350.

The cost calculator 310, the cost synthesizer 320, the subpixel estimator 330, and the disparity image generator 350 are implemented by the FPGA 31, that is, hardware circuitry, although embodiments are not limited thereto. That is, at least one of the cost calculator 310, the cost synthesizer 320, the subpixel estimator 330, and the disparity image generator 350 may be implemented by the CPU 32 executing a software program. The image acquisition unit 110, the filter 210, the cost calculator 310, the cost synthesizer 320, the subpixel estimator 330, the storage 340, and the disparity image generator 350 illustrated in FIG. 10 are the functions conceptually configured as blocks, and the embodiments are not limited to such a configuration.

Method of Deriving Optimum Penalty

Referring now to FIG. 11, an example of a method of deriving an optimum penalty P corresponding to a shift amount d will be described. This example applies to a case where a path cost Lr is calculated based on Equation (5) above.

First, a test object (hereinafter referred to as an object) is placed at a predetermined distance from the disparity value deriving device 3, in an image captured by the image acquisition unit 110 of the disparity value deriving device 3. As the distance from the disparity value deriving device 3 at which the object is placed, for example, the distance Z = 5, 10, 15, ... , 55, 60 are selected as illustrated in (a) in FIG. 11. Here, the value of B x f in Equation (2) above is a fixed value determined by the disparity value deriving device 3, and, here, for example, B x f = 120. After the distance Z and the value of B x f are determined in this manner, an ideal disparity value dpi for the object to be derived by the disparity value deriving device 3 is determined according to Equation (2), as illustrated in (a) in FIG. 11.

Here, the ideal disparity value dpi is assigned to a shift amount d in Equation (5), and a combination of a predetermined penalty P with each shift amount d to which the disparity value dpi is assigned is determined appropriately. Specifically, for example, as illustrated in (b) in FIG. 11, a value of the penalty P is related with each predetermined range of shift amounts d. By using the thus determined penalty P corresponding to a shift amount d, the cost synthesizer 320 calculates a path cost Lr by Equation (5) and calculates a synthesized cost Ls by Equation (4). The subpixel estimator 330 then derives a disparity value Δ, based on the synthesized costs Ls calculated by the cost synthesizer 320.

The disparity value Δ corresponding to each object that is derived by the disparity value deriving device 3 is compared with the ideal disparity value dpi of each object to calculate evaluation values below for the combination of the penalty P appropriately determined as described above.

(1) Mean squared error calculated by the errors between the disparity values Δ corresponding to the respective objects and the ideal disparity values dpi corresponding thereto

(2) Standard deviation for each error between the disparity values Δ corresponding to a plurality of objects and the ideal disparity values dpi corresponding thereto

(3) Number of invalid disparityes of the derived disparity values Δ corresponding to the objects (for example, an invalid disparity in a case where the minimum value cannot be obtained in the graph of the synthesized costs Ls illustrated in FIG. 12, or an invalid disparity in a case where the minimum value is a certain value or greater in the graph of the synthesized costs Ls and is unreliable)

Of the combinations of the penalty P appropriately determined as described above, a combination in which the evaluation values (1) to (3) above are the smallest is chosen and derived as a combination of the optimum penalty P with a shift amount d. The optimum penalty P thus derived has a larger value as the shift amount d is larger. The derived penalties P are configured as the penalty table PT (lookup table) in which a value of the penalty P is associated with each predetermined range of shift amounts d, as illustrated in (b) in FIG. 11. The derived penalty table PT is stored in the storage 340 in advance.

It is noted that the penalty table PT illustrating combinations of the optimum penalties P in (b) in FIG. 11 is illustrated only by way of example and the embodiments are not limited to the penalties P having values illustrated in (b) in FIG. 11. Although the evaluation values (1) to (3) above are used as evaluation values for deriving the optimum penalty P, the embodiments are not limited thereto. The optimum penalty P may be derived using other evaluation values.

Image Processing Operation of Disparity Value Deriving Device

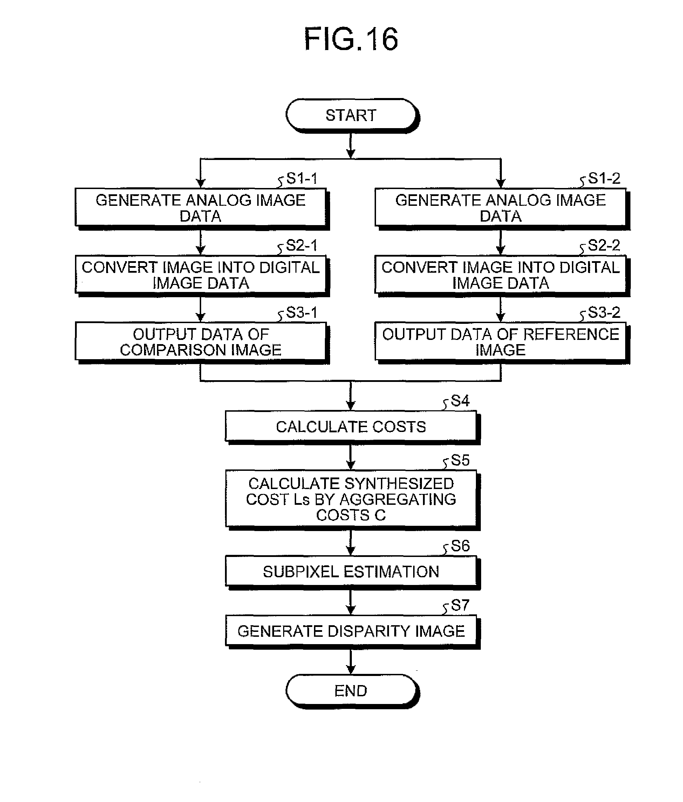

FIG. 16 is a diagram illustrating an example of the operational procedure of a stereo matching process in the disparity value deriving device according to the present embodiment. Referring to FIG. 16, the operational procedure of image processing based on the stereo matching process (the SGM method) in the disparity value deriving device 3 will be described.

Step S1-1

The image acquisition unit 110 of the disparity value deriving device 3 generates an analog image signal by imaging an object ahead with the left camera (imaging device 10b and obtains a luminance image that is an image based on the image signal. The process then proceeds to step S2-1.

Step S1-2

The image acquisition unit 110 of the disparity value deriving device 3 generates an analog image signal by imaging an object ahead with the right camera (imaging device 10a) and obtains a luminance image that is an image based on the image signal. The process then proceeds to step S2-2.

Step S2-1

The filter 210 of the disparity value deriving device 3 removes noise from the analog image signal obtained by imaging with the imaging device 10b and converts the image signal into digital image data. The process then proceeds to step S3-1.

Step S2-2

The filter 210 of the disparity value deriving device 3 removes noise from the analog image signal obtained by imaging with the imaging device 10a and converts the image signal into digital image data. The process then proceeds to step S3-2.

Step S3-1

The filter 210 outputs an image based on the digital image data converted at step S2-1 as a comparison image Ib in the stereo matching process. The process then proceeds to step S4.

Step S3-2

The filter 210 outputs an image based on the digital image data obtained by the conversion at step S2-2 as a reference image Ia in the stereo matching process. The process then proceeds to step S4.

Step S4

The cost calculator 310 of the disparity value deriving device 3 calculates and obtains the cost C(p,d) of each candidate pixel q(x+d,y), based on the luminance value of the reference pixel p(x,y) in the reference image Ia and the luminance value of each of the candidate pixels q(x+d,y) as candidates for the corresponding pixel that are specified by shifting positions by shift amounts d, that is, predetermined displacement amounts, from the pixel corresponding to the position of the reference pixel p(x,y), on the Epipolar line in the comparison image Ib based on the reference pixel p(x, y). The process then proceeds to step S5.

Step S5

The cost synthesizer 320 of the disparity value deriving device 3 calculates the synthesized cost Ls(p,d) of the candidate pixel q(x+d,y), by aggregating the costs C of pixels in the comparison image Ib for the reference pixels, which are pixels in the neighborhood of the reference pixel p(x,y) in the reference image Ia, with the cost C(p,d) of the candidate pixel q(x+d,y) calculated by the cost calculator 310.
In this case, first, the cost synthesizer 320 calculates a path cost Lr(p,d) calculated by aggregating the costs C in the comparison image Ib for the reference pixels adjacent in the directions of r to the reference pixel p(x,y) in the reference image Ia, with the cost C(p,d) of the candidate pixel q(x+d,y) calculated by the cost calculator 310, by Equation (5) above. Here, the cost synthesizer 320 refers to the penalty table PT stored in the storage 340 and calculates the path cost Lr(p,d) using the optimum penalty P associated with the shift amount d. The cost synthesizer 320 calculates the path costs Lr in eight directions ($r_0$, $r_{45}$, $r_{90}$, $r_{135}$, $r_{180}$, $r_{225}$, $r_{270}$, and $r_{315}$) namely, $Lr_0$, $Lr_{45}$, $Lr_{90}$, $Lr_{135}$, $Lr_{180}$, $Lr_{225}$, $Lr_{270}$, and $Lr_{315}$, as illustrated in FIG. 5, and finally calculates the synthesized cost Ls(p,d) based on Equation (4) above. The process then proceeds to step S6.

Step S6

The subpixel estimator 330 of the disparity value deriving device 3 executes subpixel estimation, based on the synthesized costs Ls, calculated by the cost synthesizer 320, at the shift amount d adjacent to the shift amount d corresponding to the minimum value of the synthesized costs Ls of pixels in the comparison image Ib for the reference pixel in the reference image Ia. The subpixel estimator 330 estimates that the shift amount d in units of subpixels corresponding to the local minimum value of the fitted curve (the quadratic curve convex downward in FIG. 13 and FIG. 14) obtained by subpixel estimation is the disparity value Δ. The process then proceeds to step S7.

Step S7

The disparity image generator 350 of the disparity value deriving device 3 generates the disparity image Ip (high density disparity image) that is an image representing the luminance value of each pixel in the reference image Ia by the disparity value Δ corresponding to that pixel, based on the disparity values Δ in units of subpixels derived by the subpixel estimator 330.
The image data of the disparity image Ip is then output through the I/F 35 in FIG. 9, and the distance from the imaging devices 10a, 10b to the object is calculated by the object recognition device 5.

Example of Equipment Control System Mounted on Vehicle

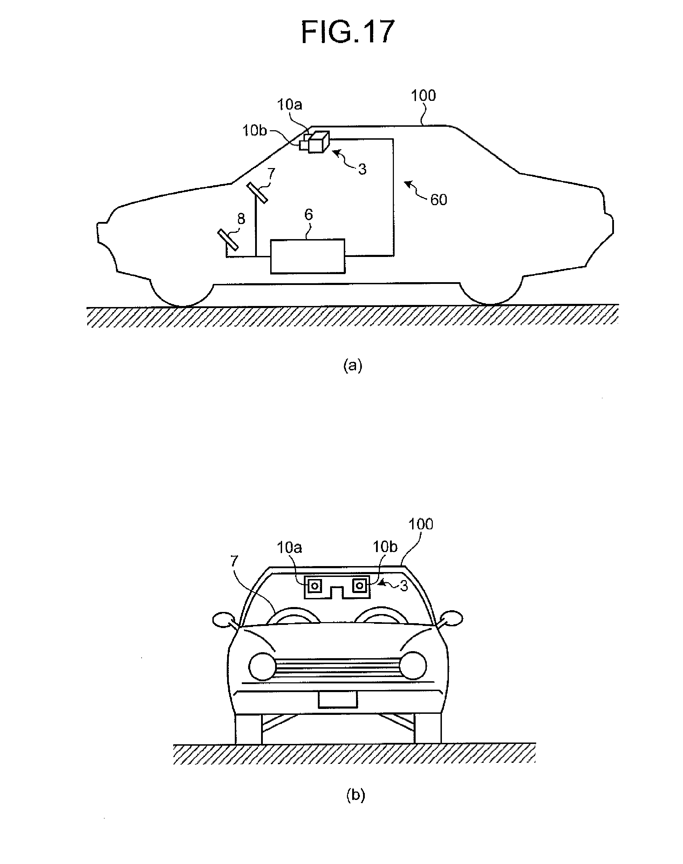

FIG. 17 illustrates an example of an equipment control system according to the present embodiment mounted on a vehicle. Referring to FIG. 17, an example of the equipment control system 60 mounted on a vehicle 100 will be described below.
In the configuration illustrated in FIG. 17, the vehicle 100 configured as an automobile includes the equipment control system 60. The equipment control system 60 includes the disparity value deriving device 3 installed in the inside of the vehicle that is a cabin space, a control device 6, a steering wheel 7, and a brake pedal 8.
The disparity value deriving device 3 has an imaging function of imaging the direction in which the vehicle 100 travels, and is installed, for example, in the vicinity of the rear view mirror on the inside of the front window of the vehicle 100. The disparity value deriving device 3 includes the main body 2, and the imaging device 10a and the imaging device 10b fixed to the main body 2. The imaging devices 10a, 10b are fixed to the main body 2 such that an object in the direction in which the vehicle 100 travels can be imaged.
The control device 6 is a device connected to the disparity value deriving device 3 in place of the object recognition device 5 in the object recognition system 1 described above and executes a variety of vehicle control with distance information from the disparity value deriving device 3 to the object that is obtained based on image data of the disparity image received from the disparity value deriving device 3. The control device 6 executes, as an example of the vehicle control, steering control of controlling a steering system (control target) including the steering wheel 7 to avoid an obstacle, or brake control of controlling the brake pedal 8 (control target) to decelerate and stop the vehicle 100, based on image data of the disparity image received from the disparity value deriving device 3.

The safety of driving the vehicle 100 can be improved by executing vehicle control such as steering control or brake control as in the equipment control system 60 including the disparity value deriving device 3 and the control device 6.

As described above, the disparity value deriving device 3 captures an image of objects in front of the vehicle 100. However, embodiments are not limited thereto. Specifically, the disparity value deriving device 3 may be installed so as to capture an image of objects in the rear or at the side of the vehicle 100. In this case, the disparity value deriving device 3 can detect the position of, for example, a vehicle behind that follows the vehicle 100 or other vehicles running side by side with the vehicle 100. The control device 6 can detect the danger when the vehicle 100 changes lanes or merges into a lane, and execute the above vehicle control. The control device 6 can also execute the above vehicle control when determining that there is a danger of collision while the vehicle 100 is being backed, for example, in a parking space, based on the disparity image of an obstacle behind the vehicle 100 that is detected by the disparity value deriving device 3.

Main Advantageous Effects of Present Embodiment

In the disparity value deriving device 3 according to the present embodiment as described above, the cost synthesizer 320 calculates a path cost Lr and a synthesized cost Ls, using the optimum penalty P associated with a shift amount d, which is derived by use of the ideal disparity value dpi for an object and the actually derived disparity value $\Delta$. An accurate disparity value (distance) thus can be derived from a near region to a distance region.

In the disparity value deriving device 3, the subpixel estimator 330 can derive disparity values $\Delta$ in units of subpixels, which are units smaller than pixels, and thus can derive accurate and high density disparity values $\Delta$, resulting in a more accurate disparity image.

Modification

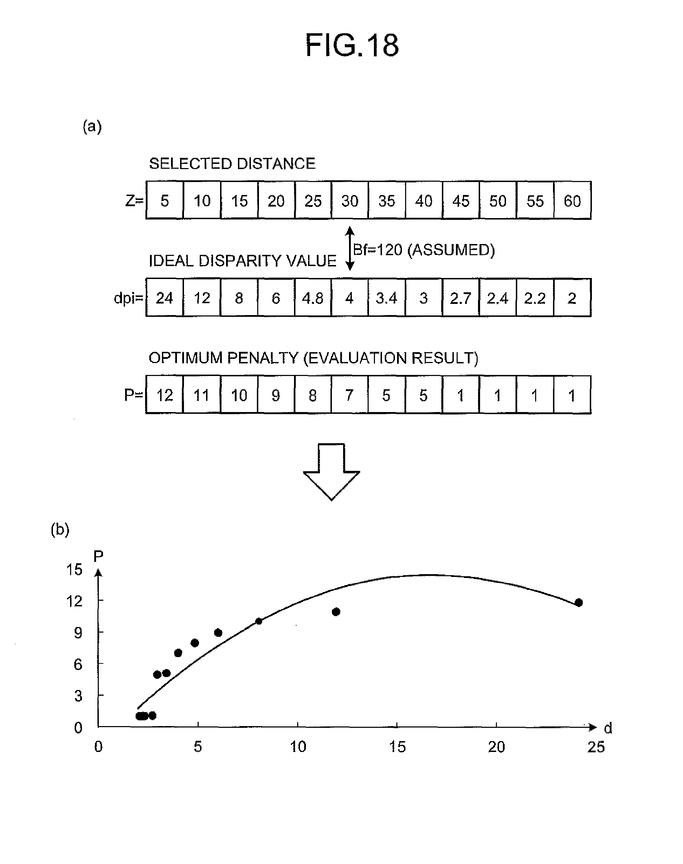

FIG. 18 illustrates obtaining a graph representing the relation between shift amounts and optimum penalties, based on ideal disparity values corresponding to selected distances. Referring to FIG. 18, in particular, optimum penalties P associated with shift amounts d in the disparity value deriving device 3 according to a modification of the embodiment will be described. The configuration of the disparity value deriving device 3 according to the present modification is the same as the configuration illustrated in FIG. 9 and FIG. 10.

In FIG. 11 above, an example has been described in which the penalty table PT that associates a value of the optimum penalty P with each predetermined range of shift amounts d is created. In the present modification, on the coordinates of shift amounts d and penalties P, combinations of the shift amounts d to which the ideal disparity values dpi are assigned and the optimum penalties P corresponding to penalties P, as in (a) in FIG. 18, are plotted as illustrated in (b) in FIG. 18. A fitted curve representing the relation between the shift amounts d and the penalties P is derived by the least squares method, as illustrated in (b) in FIG. 18, based on the plotted points on the coordinates. Information on the derived fitted curve is stored in the storage 340 in advance.

The cost synthesizer 320 refers to the information on the fitted curve stored in the storage 340 and representing the relation between the shift amounts d and the penalties P, and calculates a path cost Lr by obtaining the penalty P corresponding to a shift amount d in Equation (5). The other operations of the disparity value deriving device 3 according to the present modification are the same as the operations of the disparity value deriving device 3 in the foregoing embodiment.

The disparity value deriving device 3 according to the present modification as described above achieves the same effects as described above.

When the cost C serving as the degree of matching is an evaluation value representing the degree of similarity, the shift amount d at which the synthesized cost Ls is the largest in units of subpixels is the disparity value $\Delta$.

In the foregoing embodiment and the modification, the object recognition device 5 calculates the distance Z based on a disparity image (disparity value). However, embodiments are not limited thereto, and the CPU 32 of the image processor 30 of the disparity value deriving device 3 may calculate the distance Z.

According to the embodiments described above, an accurate disparity value can be derived.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

**Claims**

1. A disparity value deriving device that derives a disparity value representing disparity for an object, based on a reference image obtained by a first imaging unit imaging the object and a comparison image obtained by a second imaging unit imaging the object, the disparity value deriving device comprising:

   an acquisition unit configure to calculate respective degrees of matching of a plurality of candidate regions serving as candidates for a corresponding region in the comparison image corresponding to a first reference region in the reference image, based on a luminance value of the first reference region and luminance values of the candidate regions specified by shifting positions by predetermined shift amounts from a region corresponding to a position of the first reference region, on an Epipolar line in the comparison image based on the first reference region;

   a synthesizer configured to calculate a synthesized degree of matching of each of the candidate regions by aggregating a value obtained by adding a penalty associated with a corresponding one of the shift amounts to the degree of matching in the comparison image for a second reference region in the neighborhood of the first reference region, with the degree of matching of the candidate region, based on the shift amount; and

   a deriving unit configured to derive the disparity value, based on the shift amount corresponding to a first extreme of the synthesized degrees of matching of the respective candidate regions in the comparison image.

2. The disparity value deriving device according to claim 1, wherein the penalty has a larger value as the shift amount is larger.

3. The disparity value deriving device according to claim 1 or 2, further comprising a storage configured to store a lookup table in which the shift amount and the penalty are associated with each other, wherein
   the synthesizer calculates the synthesized degree of matching by using the penalty associated with the shift amount that is obtained by referring to the lookup table.

4. The disparity value deriving device according to claim 1 or 2, comprising a storage configured to store information on a fitted curve determined by the least squares method based on points on coordinates determined by a plurality of combinations of the shift amounts and the penalties associated with the respective shift amounts, wherein
   the synthesizer calculates the synthesized degree of matching by using the penalties associated with the shift amounts that are obtained by referring to the information on the fitted curve.

5. The disparity value deriving device according to any one of claims 1 to 4, wherein the deriving unit derives the disparity value by subpixel estimation, based on the mutually adjacent shift amounts including the shift amount corresponding to the first extreme.

6. The disparity value deriving device according to claim 5, wherein the deriving unit derives, as the disparity value, a shift amount in units of subpixels corresponding to a second extreme in a quadratic curve passing through three points on coordinates defined by a shift amount that corresponds to the first extreme, by two shift amounts adjacent to that shift amount, and by the synthesized degrees of matching corresponding to the shift amounts.

7. The disparity value deriving device according to claim 5, wherein the deriving unit derives, as the disparity value, a shift amount in units of subpixels corresponding to a third extreme in a quadratic curve defined by the least squares method with four or more points on coordinates defined by four or more adjacent shift amounts including the shift amount that corresponds to the first extreme, and by the synthesized degrees of matching corresponding to the shift amounts.

8. An equipment control system comprising:

   the disparity value deriving device of any one of claims 1 to 7; and
   a control device configured to control a control target with distance information from the disparity value deriving device to an object, the distance information being obtained from the disparity value derived by the disparity value deriving device.

9. A movable apparatus comprising the disparity value deriving device according to any one of claims 1 to 7.

10. A robot comprising the disparity value deriving device according to any one of claims 1 to 7.

**11.** A disparity value deriving method comprising:

acquiring a degree of matching between a reference region in a reference image captured from a first imaging position and each of a plurality of regions in a comparison image captured from a second imaging position, the regions having been shifted by predetermined shift amounts from a position corresponding to the reference region in a designated range including a corresponding region corresponding to the reference region;

synthesizing the acquired degree of matching of a reference region in the neighborhood of a predetermined reference region in the reference image and the acquired degree of matching of the predetermined reference region; and

deriving a disparity value of an object whose image is being captured in the predetermined reference region, based on a synthesized degree of matching obtained at the synthesizing, wherein

the synthesizing includes correcting the degree of matching of the reference region in the neighborhood of the predetermined reference region in accordance with a corresponding one of the shift amounts, and thereafter synthesizing the corrected degree of matching with the degree of matching of the predetermined reference region.

**12.** A computer-readable storage medium with an executable program stored thereon and executed by a computer, wherein the program instructs the computer to execute:

acquiring a degree of matching between a reference region in a reference image captured from a first imaging position and each of a plurality of regions in a comparison image captured from a second imaging position, the regions having been shifted by predetermined shift amounts from a position corresponding to the reference region in a designated range including a corresponding region corresponding to the reference region;

synthesizing the acquired degree of matching of a reference region in the neighborhood of a predetermined reference region in the reference image and the acquired degree of matching of the predetermined reference region; and

deriving a disparity value of an object whose image is being captured in the predetermined reference region, based on a synthesized degree of matching obtained at the synthesizing, wherein

the synthesizing includes correcting the degree of matching of the reference region in the neighborhood of the predetermined reference region in accordance with a corresponding one of the shift amounts, and thereafter synthesizing the corrected degree of matching with the degree of matching of the predetermined reference region.

# FIG.1

FIG.2

(a)　(b)　(c)

# FIG.3

(a)

(b)

EPIPOLAR LINE
EL

# FIG.4

# FIG.5

# FIG.6

# FIG.7

(a)

(b)

# FIG.8

# FIG.9

## FIG.10

EP 2 913 999 A1

# FIG.11

(a)

SELECTED DISTANCE

| Z= | 5 | 10 | 15 | 20 | 25 | 30 | 35 | 40 | 45 | 50 | 55 | 60 |
|---|---|---|---|---|---|---|---|---|---|---|---|---|

IDEAL DISPARITY VALUE ↕ Bf=120 (ASSUMED)

| dpi= | 24 | 12 | 8 | 6 | 4.8 | 4 | 3.4 | 3 | 2.7 | 2.4 | 2.2 | 2 |
|---|---|---|---|---|---|---|---|---|---|---|---|---|

OPTIMUM PENALTY (EVALUATION RESULT)

| P= | 12 | 11 | 10 | 9 | 8 | 7 | 5 | 5 | 1 | 1 | 1 | 1 |
|---|---|---|---|---|---|---|---|---|---|---|---|---|

⇩

(b)

PENALTY TABLE                                                                PT

| SHIFT AMOUNT d | d=0 | 0<d≤2 | d=3 | d=4 | d=5 | 6≤d<8 | 8≤d<12 | 12≤d<24 | d≥24 |
|---|---|---|---|---|---|---|---|---|---|
| PENALTY P | 0 | 1 | 5 | 7 | 8 | 9 | 10 | 11 | 12 |

# FIG.12

FIG.13

FIG.14

# FIG.15

(a) ⌐Ib

(b) ⌐Ia

STEREO MATCHING

(c) ⌐Ip

# FIG.16

# FIG.17

(a)

(b)

# FIG.18

(a)

SELECTED DISTANCE

| Z= | 5 | 10 | 15 | 20 | 25 | 30 | 35 | 40 | 45 | 50 | 55 | 60 |
|----|---|----|----|----|----|----|----|----|----|----|----|----|

$Bf=120$ (ASSUMED)

IDEAL DISPARITY VALUE

| dpi= | 24 | 12 | 8 | 6 | 4.8 | 4 | 3.4 | 3 | 2.7 | 2.4 | 2.2 | 2 |
|------|----|----|----|----|-----|---|-----|---|-----|-----|-----|---|

OPTIMUM PENALTY (EVALUATION RESULT)

| P= | 12 | 11 | 10 | 9 | 8 | 7 | 5 | 5 | 1 | 1 | 1 | 1 |
|----|----|----|----|---|---|---|---|---|---|---|---|---|

(b)

Europäisches
Patentamt

European
Patent Office

Office européen
des brevets

## EUROPEAN SEARCH REPORT

Application Number

EP 15 15 6440

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HIRSCHMULLER H: "Stereo Processing by Semiglobal Matching and Mutual Information", IEEE TRANSACTIONS ON PATTERN ANALYSIS AND MACHINE INTELLIGENCE, IEEE COMPUTER SOCIETY, USA, vol. 30, no. 2, 1 February 2008 (2008-02-01), pages 328-341, XP011246438, ISSN: 0162-8828 * page 329, left-hand column * * page 329, right-hand column * * Section 2.2; page 330 * * page 331, left-hand column * * Section 2.3; page 331 * * page 332; figure 3 * * Equation 11; page 330 * | 1-12 | INV. H04N13/00 G06T7/00 G08G1/16 |
| A,D | JP 2012 181142 A (NAT INST OF ADV IND & TECHNOL) 20 September 2012 (2012-09-20) * figures 1-3 * * figures 6-7 * * paragraph [0029] * * paragraph [0030] * * paragraph [0032] * | 1-12 | |
| A | US 2013/010073 A1 (CHIDESTER B; DANG L; DO MINH N; NGUYEN Q H; PATEL S J) 10 January 2013 (2013-01-10) * paragraph [0117] - paragraph [0155] * | 1-12 | |

TECHNICAL FIELDS
SEARCHED (IPC)

H04N
G06T
G01C
B60R
G01S
G08G
G06K

The present search report has been drawn up for all claims

| Place of search | Date of completion of the search | Examiner |
|---|---|---|
| The Hague | 8 July 2015 | Benzeroual, Karim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 15 15 6440

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2015

| Patent document cited in search report | | Publication date | Patent family member(s) | | Publication date |
|---|---|---|---|---|---|
| JP 2012181142 | A | 20-09-2012 | JP<br>JP | 5682065 B2<br>2012181142 A | 11-03-2015<br>20-09-2012 |
| US 2013010073 | A1 | 10-01-2013 | NONE | | |

EPO FORM P0459

For more details about this annex : see Official Journal of the European Patent Office, No. 12/82

**EP 2 913 999 A1**

**REFERENCES CITED IN THE DESCRIPTION**

**Patent documents cited in the description**

- JP 2012181142 A